# EUROPEAN PATENT SPECIFICATION

(11) **EP 3 845 750 B1**
(45) Date of publication and mention of the grant of the patent: **02.04.2025**
(21) Application number: 20212586.0
(22) Date of filing: 08.12.2020
(51) Int. Cl.: F02C 7/32

(54) **SPOOL POWER EXTRACTION VIA MULTIPLE GENERATORS**
WELLENLEISTUNGSEXTRAKTION ÜBER MEHRERE GENERATOREN
EXTRACTION DE PUISSANCE D'ARBRE VIA PLUSIEURS GÉNÉRATEURS

(30) Priority: 02.01.2020 US 202016732541
(43) Date of publication of application: 07.07.2021
(73) Proprietor: RTX Corporation, Farmington, CT 06032 (US)
(72) Inventor: MULDOON, Marc J., Marlborough, CT Connecticut 06447 (US)
(74) Representative: Dehns

(56) References cited:
- EP-A1- 3 130 783
- EP-A1- 3 569 842
- EP-A2- 2 728 141
- US-A1- 2007 151 258
- US-A1- 2007 265 761

## Description

### BACKGROUND

Turbofan engines include generators to produce electric power for engine components and to supply aircraft electrical demands. The generator is typically coupled to a high spool of the engine. During idle operating conditions, a load imparted on the high spool by the generator is a significant portion of a total load. Accordingly, the size and capability of the high spool may have to be modified to accommodate the loads imparted by the generator in the idle operating conditions. During non-idle engine operating conditions, the load imparted on the high spool is a much lower percentage of a total.

Turbofan engine manufacturers continue to seek further improvements to engine performance including improvements to thermal, transfer and propulsive efficiencies.

EP2728141 discloses a gas turbine engine having spools arranged to drive two or more generators, including a main generator and an auxiliary generator. US2007/151258 discloses a system for extracting additional power from a low pressure turbine in a turbofan gas turbine propulsion engine, and allowing a starter-generator that is normally driven by a low pressure turbine to supply starting torque to the turbofan engine. US2007/265761 describes a gas turbine engine system having a low pressure shaft and high pressure shaft, and a continuously variable transmission, the output of which being adapted to rotate faster than its input, the input being connected to the low pressure shaft, and the output being connected to a generator. EP3569842 discloses a gas turbine engine having a compressor section, an air tap, an auxiliary compressor, an electric motor, and first and second heat exchangers. EP3130783 A1 discloses a method for operating a gas turbine engine having a starter-electric generator driven by one of a plurality of shafts of the gas turbine engine.

### SUMMARY

From a first aspect of the invention, a turbofan engine is provided according to claim 1.

In another embodiment according to any of the previous embodiments, the first generator and the second generator are electrically actuated to remove a load exerted on a corresponding one of the high spool and the low spool.

In another embodiment according to any of the previous embodiments, the first engine operating condition includes an idle operating condition where the high spool and the low spool are rotating within an idle speed range.

In another embodiment according to any of the previous embodiments, the second engine operating condition includes a non-idle operating condition where the high spool and the low spool are rotating at a speed above the idle speed range.

In another embodiment according to any of the previous embodiments, the turbofan engine further includes an accessory gear box that is coupled to the high spool through a first tower shaft and the first generator is driven by an output from the accessory gearbox.

In another embodiment according to any of the previous embodiments, the turbofan engine includes a second tower shaft that is coupled to the accessory gear box and the second generator is driven by an output of the accessory gearbox driven by the second tower shaft.

In another embodiment according to any of the previous embodiments, the second generator is disposed aft of a turbine section and coupled to the low spool shaft.

In another embodiment according to any of the previous embodiments, the second generator is disposed at least partially in a tail cone.

In another embodiment according to any of the previous embodiments, the first generator includes a motor/generator that is capable of driving the high spool for starting of the turbofan engine.

From a further aspect of the invention, a method of operating a turbofan engine as claimed in claim 10 is provided.

In another embodiment according to the previous embodiment, decoupling of the first generator and the second generator includes actuating a corresponding one of a first clutch and a second clutch to disengage rotational input from a corresponding one of the high spool and low spool.

In another embodiment according to any of the previous embodiments, decoupling of the first generator and the second generator includes electrically decoupling a corresponding one of the first generator and the second generator to not impart a load on a corresponding one of the high spool and the low spool.

In another embodiment according to any of the previous embodiments, the method further includes transitioning between generating power with the second generator in the idle engine operating condition to generating power with the first generator in the non-idle engine operating condition by overlapping power generation from both of the first generator and the second generator for a transition period.

In another embodiment according to any of the previous embodiments, the first generator is operated to generate electric power within a rotational speed range that corresponds to non-idle operation of the high spool and the second generator is operated within a rotational speed range to generate electric power within a rotation speed range that corresponds with idle operation of the low spool.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example turbofan engine.
Figure 2 is a schematic view of an example turbofan engine embodiment including first and second generators.
Figure 3 is another schematic view another example turbofan engine embodiment including a generator disposed within a tail cone.
Figure 4 is a schematic view example power generator operation at different stages of a flight profile.

### DETAILED DESCRIPTION

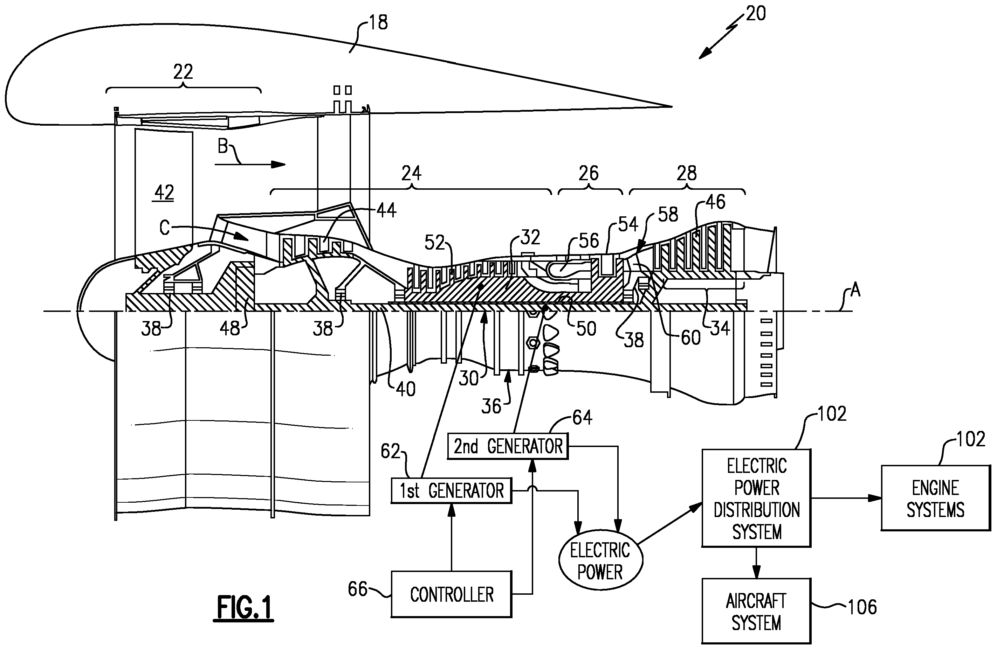

Figure 1 schematically illustrates a turbofan engine 20. The turbofan engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to a fan 42 through a speed change mechanism, which in exemplary turbofan engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption may be referred to as bucket cruise Thrust Specific Fuel Consumption ('TSFC') and provides a parameter of lbm of fuel being burned divided by lbf of thrust the engine produces at that minimum point.

The example engine 20 includes a first generator 62 and a second generator 64 for producing electric power that is provided to an engine power distribution system 102 for operation of engine systems 104 and aircraft systems 106. The first generator 62 is powered through a coupling to the high speed spool 32. The second generator 64 is powered through a coupling to the low speed spool 30. A controller 66 directs operation of the first generator 62 and the second generator 64 based on current engine operating conditions. At low power conditions such as during engine idle operating conditions, loads placed on the high speed spool 32 for power extraction are relative large in proportion to the overall load demands. Accordingly, the proportionally larger loads are of a sufficient level to influence the size of high pressure compressor 52 and the high pressure turbine 54 to compensate for stability concerns. Moreover, the increased size and capacity can impact overall engine efficiency due the required added energy to mitigate stability.

Extracting power from the low speed spool 30 during all engine operating conditions potentially requires additional devices and or components to compensate for the wide variation in operational speed ranges encountered during engine operation. The wide range of variations can be addressed by utilizing a larger generator that is sized to produce minimum rated power at low idle speeds. However, such a larger generator is then significantly oversized for the remainder of the engine operating cycle. Alternatively, a variable transmission could be utilized. However, such transmissions complicate operation and add weight to the point of exhausting any benefit.

The example engine 20 provides the first generator 62 that is sized and configured to provide efficient power generation at non-idle engine operating speeds. The second generator is sized and configured to provide efficient power generation at lower engine speeds such as are encountered during engine idle operation. The different sizing of the generators 62, 64 may allow spools 30, 32 to be designed differently to have more efficient engine operating points. Moreover, different sized generators 62, 64 provides for placement of a load on the spool 30, 32 best suited to power the generator 62, 64 for a given engine operating condition. Additionally, the tailored sizing of the generators 62, 64 to a specific engine operation range may avoid a need for speed compensating devices.

The sizing of the first generator 62 and the second generator 64 refers to the capacity to produce electric power at the relative speeds of each spool 30, 32. The sizing may include different lengths for each of the first generator 62 and the second generator 64. The sizing may include different numbers of winding and/or winding configurations. Additionally, the first generator 62 and the second generator 64 may be of the same configuration but be driven by different gear systems to provide the desired speed to generate electric power.

It should be appreciated that the controller 66 can be part of an overall engine controller or an individual controller that controls production of electric power. The example controller 66 relates to a device and system for performing necessary computing or calculation operations. This system may be specially constructed for this purpose, or it may comprise at least a general-purpose computer selectively activated or reconfigured by a computer program stored in the computer. The computing system can also consist of a network of (different) processors. A computer program and also data required for its execution may be stored in a computer readable storage medium, such as, but is not limited to, any type of disk including floppy disks, optical disks, CD-ROMs, magnetic-optical disks, read-only memories (ROMs), random access memories (RAMS), EPROMs, EEPROMs, magnetic or optical cards, application specific integrated circuits (ASICs), or any type of media suitable for storing electronic instructions, and each coupled to a computer system bus. Furthermore, the computer referred to may include a single processor or may be architectures employing multiple processor designs for increased computing capability.

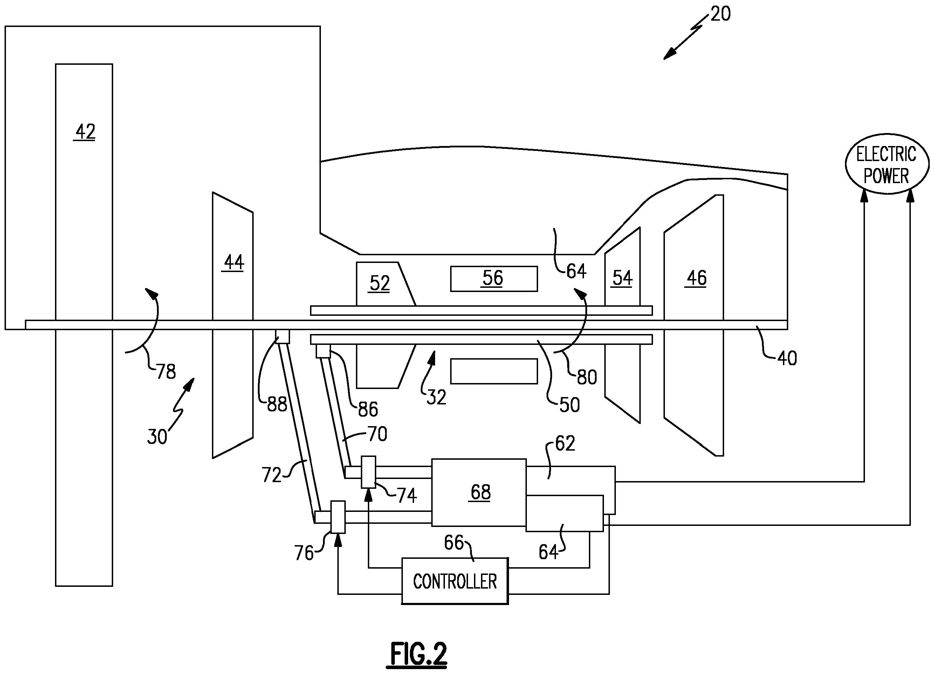

Referring to Figure 2, the example engine 20 is shown schematically with the first generator 62 and the second generator 64. An accessory gearbox 68 is provided and mounted about an exterior of the engine 20. In one disclosed example, the accessory gearbox 68 is mounted to the engine static structure 36.

A first tower shaft 70 is coupled to the outer shaft 50 of the high speed spool 32. The first tower shaft 70 is coupled through a geared interface 86 to the outer shaft 50 in a known manner. The tower shaft 70 powers a portion of the accessory gearbox 68 that is drives the first generator 62. A second tower shaft 72 is coupled through a second geared interface 88 to the inner shaft 40 of the low speed spool 30. The geared interfaces 86, 88 may be of any configuration and arrangement within the contemplated scope of this disclosure.

A first clutch 74 provides for the decoupling of the first generator 62 from rotational input from the high speed spool 32.

A second clutch 76 provides for decoupling of the second generator from rotational input from the low speed spool 30. Operation of the clutches 74, 76 is provided by the controller 66. The controller 66 directs operation of the clutches 74, 76 to unload a corresponding spool 30, 32 depending on current engine operating conditions.

In a first engine operating condition, the engine is idling and rotation of the low spool, indicated at 78 is low and within a targeted speed range that corresponds with engine idling operation. The second generator 64 is sized and configured to operate within the targeted engine idling operation speed range. In a second engine operating condition, the engine is operating at higher non-idle speeds such as those encountered during takeoff, climb and cruise engine operating conditions.

The first generator 62 is sized and configured to operate efficiently during rotation indicated at 80 of the high speed spool 32 at the higher non-idle engine operating speeds. The first generator 62 may comprises a motor/generator that is capable of driving the high speed spool 32 for starting purposes.

It should be appreciated, that sizing and configuring of the first and second generators 62, 64 as used in the context of this disclosure includes electrically sizing the generators to provide the desired electric power output at the targeted speed ranges. Moreover, such sizing and configuring also includes a gear ratio for each generator 62, 64 to that provides for operation of the generator 62, 64 given the input speeds of the targeted ranges.

The second tower shaft 72 is schematically shown as being coupled to the second generator 64 through the same accessory gearbox 68 as the first generator 62. In such a configuration, the accessory gearbox 68 may include gear systems to separately drive each of the first and second generators 62, 64. It should be also understood that a separate accessory gearbox could be utilized for each of the generators 62, 64 and is within the scope of this disclosure.

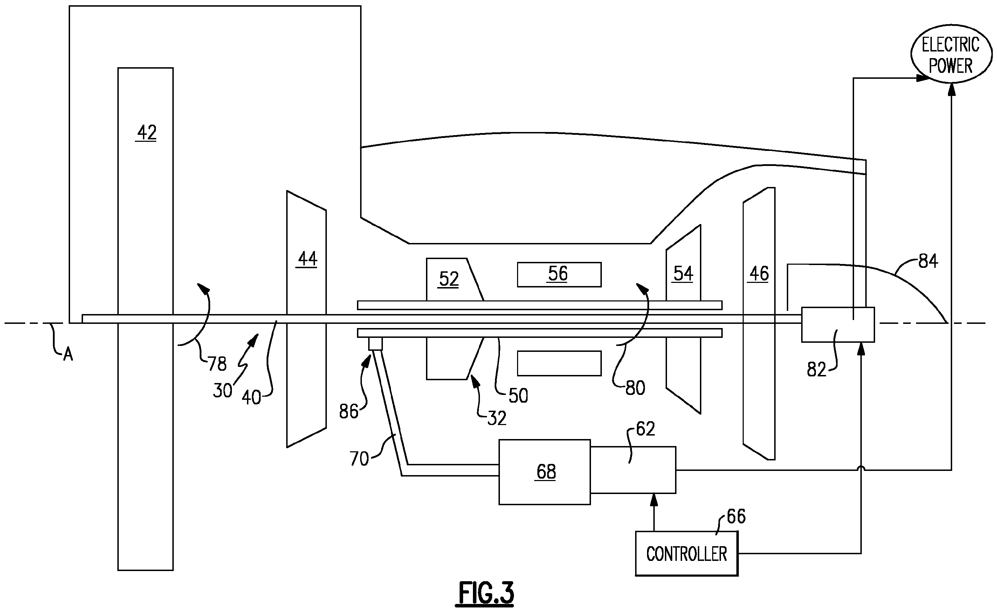

Referring to Figure 3, another engine embodiment is schematically shown with a second generator 82 disposed aft of the low pressure turbine 46. In this example embodiment, the second generator 82 is directly coupled to the low speed shaft 40. Additionally, the second generator 82 is disposed within a tail cone 84 of the engine to provide some protection from hot exhaust gases exiting the turbine 46.

In the example embodiment shown in Figure 3, the first generator 62 is coupled through the accessory gearbox 68 to the high speed spool 30. A clutch is not provide because the controller 66 may direct operation to electrically decouple operation of the first generator 62. However, it will be appreciated that a clutch may also be provided. The electrical decoupling removes any significant load imparted on the high speed spool 30 by reducing or removing excitation current and/or through other electrical circuitry. Similarly, the second generator 84 is also decoupled through the use of electrical circuitry rather than (or in addition to) a mechanical decoupling. The second generator 84 may also be decoupled through the use of a clutch.

It should be appreciated, that disengaging of the first and second generators 62, 64 such that load is removed from the corresponding spool 30, 32 by other approaches is within the scope and contemplation of this disclosure. Accordingly, any way of removing loads on the corresponding spools 30, 32 when not generating electric power can be utilized and is within the scope and contemplation of this disclosure.

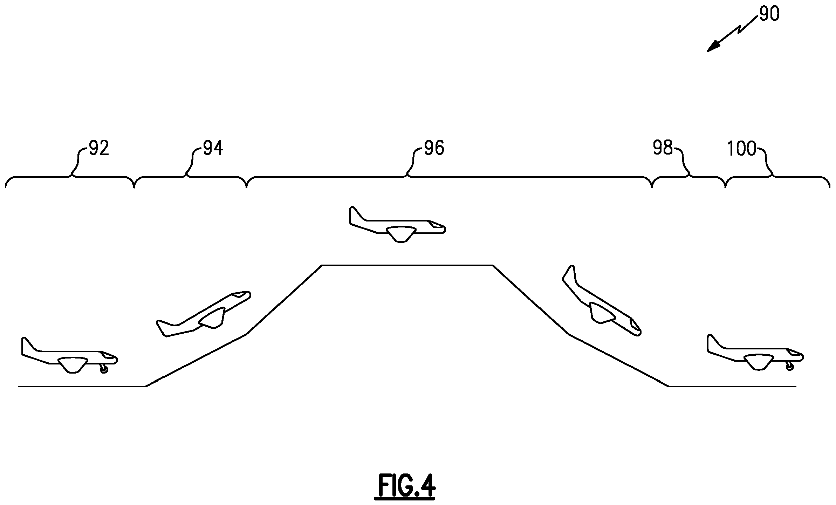

Referring to Figure 4, with continued reference to Figures 2 and 3, an example engine operation profile 90 for different stages of aircraft operation is schematically shown. In a first engine operating condition indicated at 92, the engine 20 is idling and both the low spool 30 and high spool 32 are rotating at relatively low speeds. The disclosed idle speed range corresponds with operation of the engine 20 during ground operations and can vary based on specific engine configurations within the scope and contemplation of this disclosure. In this engine idling operating condition, the first generator 62 is decoupled from the high speed spool 30 to remove imparted load. The decoupling of the first generator 62 may be accomplished electrically or mechanically by actuation of the first clutch 74. The second generator 64 is coupled to the low speed spool 30 and generates electric power that is supplied to the aircraft and engine systems.

As engine speeds increase during takeoff and climb operation, a transition between the second generator and the first generator is performed. In the transition period shown schematically at 94, the engine speed increases to a speed corresponding with efficient performance of the first generator 62. Operation of the second generator 64 is tapered off and finally discontinued. Tapering can be implemented either mechanical by way of a clutch or electrically by removing gradually removing an electric load. An overlap period during the transition where both generators 62, 64 provides continuous power supply to the engine and aircraft systems.

After the transition period 94, the first generator 62 produces electric power during a non-idling operational period shown at 96. The second generator 82 is decoupled such that additional load for power generation is removed from the low speed spool 30. The second generator 64 is turned off at the higher rotational speed of the low speed spool 30 to limit or avoid excessive voltage or exceedance of mechanical speed limitations when run above the lower deign speeds with a generator optimized for idle speeds.

The proportion of the total load on the high speed spool 32 during the operating period 96 imparted by the first generator 62 is low and therefore does not impart substantial performance debits.

As the rotation of the high and low speed spools 30, 32 slows such as during descent, landing and taxing after landing indicated at 98 and 100, the controller 66 directs transition back to power generation by the second generator 64. The first generator 62 is decoupled from the high speed spool 32 to remove load to improve engine efficiency.

Accordingly, the disclosed selective operation of the high speed spool powered generator and the low speed spool generator provides power extraction at idle conditions where the maximum fuel burn benefit is achieved, without the addition of a complex transmission to correct the wide low spool speed range. Moreover, because both the high speed spool powered generator and the low speed spool powered generator are being used at targeted speeds, each is designed in a weight and size-efficient manner without speed-correction mechanisms.

Although an example embodiment has been disclosed, a worker of ordinary skill in this art would recognize that certain modifications would come within the scope of the invention. For that reason, the following claims should be studied to determine the scope and content of the invention.

## Claims

1. A turbofan engine (20), comprising:
a high spool (32) including a high pressure compressor (52) coupled to a high pressure turbine (54) through a high spool shaft (50);
a low spool (30) including a low pressure compressor (44) coupled to a low pressure turbine (46) through a low spool shaft (40);
a first generator (62) coupled to the high spool shaft (50);
a first clutch (74) operable to selectively decouple the first generator (62) from the high spool (32) when in a first engine operating condition;
a second generator (64) coupled to the low spool shaft (40), the second generator (64) generating electric power in a first engine operating condition and the first generator (62) generating power in a second engine operating condition,
a second clutch (76) operable to selectively decouple the second generator (64) from the low spool (30) when in the second engine operating condition;
a controller (66) that directs operation of the first generator (62), the first clutch (74), the second generator (64), and the second clutch (76), wherein in the second operating condition, the controller (66) operates the second clutch (76) and the first generator (62) to generate electric power within a rotational speed range corresponding to non-idle operation of the high spool (32) and in the first engine operating condition where the first clutch (74) decouples the first generator (62) from the high spool (32), the second generator (64) is operated within a rotational speed range to generate electric power within a rotation speed range corresponding with idle operation of the low spool (30).

2. The turbofan engine (20) as recited in claim 1, wherein the first generator (62) and the second generator (64) are electrically actuated to remove a load exerted on a corresponding one of the high spool (32) and the low spool (30).

3. The turbofan engine (20) as recited in any preceding claim, wherein the first engine operating condition comprises an idle operating condition where the high spool (32) and the low spool (30) are rotating within an idle speed range.

4. The turbofan engine (20) as recited in claim 3, wherein the second engine operating condition comprises a non-idle operating condition where the high spool (32) and the low spool (30) are rotating at a speed above the idle speed range.

5. The turbofan engine (20) as recited in any preceding claim, further comprising an accessory gear box (68) coupled to the high spool (32) through a first tower shaft (70) and the first generator is driven by an output from the accessory gearbox (68).

6. The turbofan engine (20) as recited in claim 5, including a second tower shaft (72) coupled to the accessory gear box (68) and the second generator (64) is driven by an output of the accessory gearbox (68) driven by the second tower shaft (72).

7. The turbofan engine (20) as recited in any preceding claim, wherein the second generator (64) is disposed aft of a turbine section (28) and coupled to the low spool shaft (30).

8. The turbofan engine (20) as recited in claim 7, wherein the second generator (64) is disposed at least partially in a tail cone (84).

9. The turbofan engine (20) as recited in any preceding claim, wherein the first generator (62) comprises a motor/generator that is capable of driving the high spool (32) for starting of the turbofan engine (20).

10. A method of operating a turbofan engine (20), comprising:
decoupling a first generator (62) from a high spool (32) in an engine idle operating condition;
coupling a second generator (64) to a low spool (30) to generate electric power in the engine idle operating condition; and
decoupling the second generator (64) and coupling the first generator (62) to the high spool (32) to generate electric power at a non-idle engine operating condition.

11. The method as recited in claim 10, wherein decoupling of the first generator (62) and the second generator (64) comprises actuating a corresponding one of a first clutch (74) and a second clutch (76) to disengage rotational input from a corresponding one of the high spool (32) and low spool (30).

12. The method of claim 10 or claim 11, wherein decoupling of the first generator (62) and the second generator (64) comprises electrically decoupling a corresponding one of the first generator (62) and the second generator (64) to not impart a load on a corresponding one of the high spool (32) and the low spool (30).

13. The method of any of claims 10, 11 or 12, further comprising transitioning between generating power with the second generator (64) in the idle engine operating condition to generating power with the first generator (62) in the non-idle engine operating condition by overlapping power generation from both of the first generator (62) and the second generator (64) for a transition period.

14. The method of any of claims 10 to 13, wherein the first generator (62) is operated to generate electric power within a rotational speed range corresponding to non-idle operation of the high spool (32) and the second generator (64) is operated within a rotational speed range to generate electric power within a rotation speed range corresponding with idle operation of the low spool (30).

## Patentansprüche

1. Turbofan-Triebwerk (20), umfassend:
eine Hochdruckspule (32), die einen Hochdruckverdichter (52) beinhaltet, der über eine Hochdruckspulenwelle (50) an eine Hochdruckturbine (54) gekoppelt ist;
eine Niederdruckspule (30), die einen Niederdruckverdichter (44) beinhaltet, der über eine Niederdruckspulenwelle (40) an eine Niederdruckturbine (46) gekoppelt ist;
einen ersten Generator (62), der an die Hochdruckspulenwelle (50) gekoppelt ist;
eine erste Kupplung (74), die dazu dient, den ersten Generator (62) in einem ersten Triebwerksbetriebszustand selektiv von der Hochdruckspule (32) zu entkoppeln;
einen zweiten Generator (64), der an die Niederdruckspulenwelle (40) gekoppelt ist, wobei der zweite Generator (64) in einem ersten Triebwerksbetriebszustand elektrische Leistung erzeugt und der erste Generator (62) in einem zweiten Triebwerksbetriebszustand Leistung erzeugt,
eine zweite Kupplung (76), die dazu dient, den zweiten Generator (64) in dem zweiten Triebwerksbetriebszustand selektiv von der Niederdruckspule (30) zu entkoppeln;
eine Steuerung (66), die den Betrieb des ersten Generators (62), der ersten Kupplung (74), des zweiten Generators (64) und der zweiten Kupplung (76) lenkt, wobei die Steuerung (66) in dem zweiten Betriebszustand die zweite Kupplung (76) und den ersten Generator (62) betreibt, um elektrische Leistung innerhalb eines Drehzahlbereichs zu erzeugen, der einem Nicht-Leerlaufbetrieb der Hochdruckspule (32) entspricht, und wobei der zweite Generator (64) in dem ersten Triebwerksbetriebszustand, in dem die erste Kupplung (74) den ersten Generator (62) von der Hochdruckspule (32) entkoppelt, innerhalb eines Drehzahlbereichs betrieben wird, um elektrische Leistung innerhalb eines Drehzahlbereichs zu erzeugen, der einem Leerlaufbetrieb der Niederdruckspule (30) entspricht.

2. Turbofan-Triebwerk (20) nach Anspruch 1, wobei der erste Generator (62) und der zweite Generator (64) elektrisch betätigt werden, um eine auf eine entsprechende von der Hochdruckspule (32) und der Niederdruckspule (30) ausgeübte Last abzubauen.

3. Turbofan-Triebwerk (20) nach einem der vorhergehenden Ansprüche, wobei der erste Triebwerksbetriebszustand einen Leerlaufbetriebszustand umfasst, in dem sich die Hochdruckspule (32) und die Niederdruckspule (30) innerhalb eines Leerlaufdrehzahlbereichs drehen.

4. Turbofan-Triebwerk (20) nach Anspruch 3, wobei der zweite Triebwerksbetriebszustand einen Nicht-Leerlaufbetriebszustand umfasst, in dem sich die Hochdruckspule (32) und die Niederdruckspule (30) mit einer Drehzahl oberhalb des Leerlaufdrehzahlbereichs drehen.

5. Turbofan-Triebwerk (20) nach einem der vorhergehenden Ansprüche, ferner umfassend ein Zusatzgetriebe (68), das über eine erste Turmwelle (70) an die Hochdruckspule (32) gekoppelt ist, und wobei der erste Generator durch einen Ausgang von dem Zusatzgetriebe (68) angetrieben wird.

6. Turbofan-Triebwerk (20) nach Anspruch 5, das eine zweite Turmwelle (72) beinhaltet, die an das Zusatzgetriebe (68) gekoppelt ist, und wobei der zweite Generator (64) durch einen Ausgang des Zusatzgetriebes (68) angetrieben wird, das durch die zweite Turmwelle (72) angetrieben wird.

7. Turbofan-Triebwerk (20) nach einem der vorhergehenden Ansprüche, wobei der zweite Generator (64) hinter einem Turbinenabschnitt (28) angeordnet und an die Niederdruckspulenwelle (30) gekoppelt ist.

8. Turbofan-Triebwerk (20) nach Anspruch 7, wobei der zweite Generator (64) zumindest teilweise in einem Heckkonus (84) angeordnet ist.

9. Turbofan-Triebwerk (20) nach einem der vorhergehenden Ansprüche, wobei der erste Generator (62) einen Motor/Generator umfasst, der in der Lage ist, die Hochdruckspule (32) zum Starten des Turbofan-Triebwerks (20) anzutreiben.

10. Verfahren zum Betreiben eines Turbofan-Triebwerks (20), umfassend:
Entkoppeln eines ersten Generators (62) von einer Hochdruckspule (32) in einem Leerlaufbetriebszustand des Triebwerks;
Koppeln eines zweiten Generators (64) an eine Niederdruckspule (30), um in dem Leerlaufbetriebszustand des Triebwerks elektrische Leistung zu erzeugen; und
Entkoppeln des zweiten Generators (64) und Koppeln des ersten Generators (62) an die Hochdruckspule (32), um in einem Nicht-Leerlaufbetriebszustand des Triebwerks elektrische Leistung zu erzeugen.

11. Verfahren nach Anspruch 10, wobei das Entkoppeln des ersten Generators (62) und des zweiten Generators (64) Betätigen einer entsprechenden von einer ersten Kupplung (74) und einer zweiten Kupplung (76) umfasst, um den Dreheingang von einer entsprechenden von der Hochdruckspule (32) und der Niederdruckspule (30) zu lösen.

12. Verfahren nach Anspruch 10 oder Anspruch 11, wobei das Entkoppeln des ersten Generators (62) und des zweiten Generators (64) elektrisches Entkoppeln eines entsprechenden von dem ersten Generator (62) und dem zweiten Generator (64) umfasst, um keine Last auf eine entsprechende von der Hochdruckspule (32) und der Niederdruckspule (30) aufzubringen.

13. Verfahren nach einem der Ansprüche 10, 11 oder 12, ferner umfassend Wechseln zwischen Erzeugen von Leistung mit dem zweiten Generator (64) in dem Leerlaufbetriebszustand des Triebwerks und Erzeugen von Leistung mit dem ersten Generator (62) in dem Nicht-Leerlaufbetriebszustand des Triebwerks durch Überlappen der Leistungserzeugung von sowohl dem ersten Generator (62) als auch dem zweiten Generator (64) für eine Übergangsperiode.

14. Verfahren nach einem der Ansprüche 10 bis 13, wobei der erste Generator (62) betrieben wird, um elektrische Leistung innerhalb eines Drehzahlbereichs zu erzeugen, der einem Nicht-Leerlaufbetrieb der Hochdruckspule (32) entspricht, und der zweite Generator (64) innerhalb eines Drehzahlbereichs betrieben wird, um elektrische Leistung innerhalb eines Drehzahlbereichs zu erzeugen, der dem Leerlaufbetrieb der Niederdruckspule (30) entspricht.

## Revendications

1. Turboréacteur à double flux (20) comprenant :
un corps supérieur (32) incluant un compresseur haute pression (52) couplé à une turbine haute pression (54) par l'intermédiaire d'un arbre de corps supérieur (50) ;
un corps inférieur (30) comprenant un compresseur basse pression (44) couplé à une turbine basse pression (46) par l'intermédiaire d'un arbre de corps inférieur (40) ;
un premier générateur (62) couplé à l'arbre de corps supérieur (50) ;
un premier embrayage (74) pouvant fonctionner pour découpler sélectivement le premier générateur (62) du corps supérieur (32) lorsqu'il se trouve dans une première condition de fonctionnement du moteur ;
un second générateur (64) couplé à l'arbre de corps inférieur (40), le second générateur (64) générant de l'énergie électrique dans un premier état de fonctionnement du moteur et le premier générateur (62) générant de l'énergie dans un second état de fonctionnement du moteur,
un second embrayage (76) pouvant fonctionner pour découpler sélectivement le second générateur (64) du corps inférieur (30) lorsqu'il se trouve dans le second état de fonctionnement du moteur ;
un contrôleur (66) qui dirige le fonctionnement du premier générateur (62), du premier embrayage (74), du second générateur (64) et du second embrayage (76), dans lequel, dans le second état de fonctionnement, le contrôleur (66) actionne le second embrayage (76) et le premier générateur (62) pour générer de l'énergie électrique dans une plage de vitesses de rotation correspondant au fonctionnement non au ralenti du corps supérieur (32) et dans le premier état de fonctionnement du moteur lorsque le premier embrayage (74) découple le premier générateur (62) du corps supérieur (32), le second générateur (64) est actionné dans une plage de vitesses de rotation pour générer de l'énergie électrique dans une plage de vitesses de rotation correspondant au fonctionnement au ralenti du corps inférieur (30) .

2. Turboréacteur à double flux (20) selon la revendication 1, dans lequel le premier générateur (62) et le second générateur (64) sont actionnés électriquement pour supprimer une charge exercée sur l'un correspondant du corps supérieur (32) et du corps inférieur (30).

3. Turboréacteur à double flux (20) selon une quelconque revendication précédente, dans lequel le premier état de fonctionnement du moteur comprend un état de fonctionnement au ralenti dans lequel le corps supérieur (32) et le corps inférieur (30) tournent dans une plage de vitesse de ralenti.

4. Turboréacteur à double flux (20) selon la revendication 3, dans lequel le second état de fonctionnement du moteur comprend un état de fonctionnement non au ralenti dans lequel le corps supérieur (32) et le corps inférieur (30) tournent à une vitesse supérieure à la plage de vitesse de ralenti.

5. Turboréacteur à double flux (20) selon une quelconque revendication précédente, comprenant également un réducteur accessoire (68) couplée au corps supérieur (32) par l'intermédiaire d'un premier arbre de tour (70) et le premier générateur est entraîné par une sortie du réducteur accessoire (68).

6. Turboréacteur à double flux (20) selon la revendication 5, incluant un second arbre de tour (72) couplé au réducteur accessoire (68) et le second générateur (64) est entraîné par une sortie du réducteur accessoire (68) entraîné par le second arbre de tour (72).

7. Turboréacteur à double flux (20) selon une quelconque revendication précédente, dans lequel le second générateur (64) est disposé à l'arrière d'une section de turbine (28) et couplé à l'arbre de corps inférieur (30).

8. Turboréacteur à double flux (20) selon la revendication 7, dans lequel le second générateur (64) est disposé au moins partiellement dans un cône de queue (84).

9. Turboréacteur (20) selon une quelconque revendication précédente, dans lequel le premier générateur (62) comprend un moteur/générateur qui est capable d'entraîner le corps supérieur (32) pour démarrer le turboréacteur (20).

10. Procédé de fonctionnement d'un turboréacteur à double flux (20) comprenant :
le découplage d'un premier générateur (62) d'un corps supérieur (32) dans un état de fonctionnement au ralenti du moteur ;
le couplage d'un second générateur (64) à un corps inférieur (30) pour générer de l'énergie électrique dans l'état de fonctionnement au ralenti du moteur ; et
le découplage du second générateur (64) et le couplage du premier générateur (62) au corps supérieur (32) pour générer de l'énergie électrique dans l'état de fonctionnement du moteur non au ralenti.

11. Procédé selon la revendication 10, dans lequel le découplage du premier générateur (62) et du second générateur (64) comprend l'actionnement de l'un correspondant d'un premier embrayage (74) et d'un second embrayage (76) pour désengager l'entrée de rotation de l'un correspondant du corps supérieur (32) et du corps inférieur (30).

12. Procédé selon la revendication 10 ou la revendication 11, dans lequel le découplage du premier générateur (62) et du second générateur (64) comprend le découplage électrique de l'un correspondant du premier générateur (62) et du second générateur (64) pour ne pas transmettre de charge à l'un correspondant du corps supérieur (32) et du corps inférieur (30).

13. Procédé selon l'une quelconque des revendications 10, 11 ou 12, comprenant également la transition entre la génération d'énergie avec le second générateur (64) dans l'état de fonctionnement du moteur au ralenti et la génération d'énergie avec le premier générateur (62) dans l'état de fonctionnement du moteur non au ralenti en chevauchant la génération d'énergie à partir du premier générateur (62) et du second générateur (64) pendant une période de transition.

14. Procédé selon l'une quelconque des revendications 10 à 13, dans lequel le premier générateur (62) est actionné pour générer de l'énergie électrique dans une plage de vitesses de rotation correspondant au fonctionnement non au ralenti du corps supérieur (32) et le second générateur (64) est actionné dans une plage de vitesses de rotation pour générer de l'énergie électrique dans une plage de vitesses de rotation correspondant au fonctionnement au ralenti du corps inférieur (30).
